# EUROPÄISCHE PATENTSCHRIFT

(11) **EP 1 734 886 B1**
(45) Veröffentlichungstag und Bekanntmachung des Hinweises auf die Patenterteilung: **09.07.2008**
(21) Anmeldenummer: 05745553.7
(22) Anmeldetag: 12.04.2005
(51) Int. Cl.: A61C 8/00

(54) **ZAHNIMPLANTAT MIT ZWEI IMPLANTATTEILEN**
DENTAL IMPLANT WITH TWO IMPLANT PARTS
IMPLANT DENTAIRE AVEC DEUX ELEMENTS IMPLANT

(30) Priorität: 14.04.2004 DE 102004018512
(43) Veröffentlichungstag der Anmeldung: 27.12.2006
(73) Patentinhaber: Laux, Robert, 71560 Sulzbach/Murr (DE)
(72) Erfinder: Laux, Robert, 71560 Sulzbach/Murr (DE)
(74) Vertreter: Wittner, Walter
(86) Internationale Anmeldenummer: PCT/EP2005/003834
(87) Internationale Veröffentlichungsnummer: WO 2005/099613

(56) Entgegenhaltungen:
- EP-A- 0 323 421
- EP-A- 0 823 243
- EP-A- 1 346 701
- DE-A1- 4 110 789
- DE-A1- 4 141 128
- US-A- 5 439 380
- US-A- 5 716 215
- US-A- 5 782 918
- US-B1- 6 276 938
- US-B1- 6 663 388

## Beschreibung

Die Erfindung bezieht sich auf ein Zahnimplantat nach dem Oberbegriff des Anspruches 1.

In der Druckschrift WO 01/50977 A1 wird ein Zahnimplantat beschrieben, welches einen in den Kiefer des Patienten einzusetzenden Basisträger umfasst, auf den ein Aufbaupfosten aufgesetzt wird, der Träger der Zahnkrone ist. Der Aufbaupfosten ist zweigeteilt und besitzt einen oberen Pfostenteil und einen unteren Pfostenteil, wobei die beiden Pfostenteile über eine schiefe Trennebene separiert sind, welche mit der Längsachse des Aufbaupfostens einen von 90° abweichenden Winkel einschließt. Die beiden Pfostenteile können in unterschiedlichen Winkelpositionen in Bezug auf die Längsachse des Aufbaupfostens zusammengesetzt werden. Aufgrund der schiefen Trennebene zwischen den beiden Pfostenteilen können je nach Winkellage des oberen Pfostenteils unterschiedliche, winklige Ausrichtungen eingestellt werden.

Die auf den oberen Pfostenteil aufzusetzende Krone nimmt die gleiche Schieflage ein wie der obere Pfostenteil, was den Vorteil bietet, dass individuelle Anpassungen an den Mundraum des Patienten möglich sind. Hierbei ist jedoch darauf zu achten, dass der schiefe Winkel auch ein schiefwinkliges Aufsetzen auf den oberen Pfostenteil bedingt, jedoch die Platzverhältnisse insbesondere wegen der benachbarten Zähne oftmals eingeengt sind und nur relativ geringfügige Winkelabweichungen gegenüber der Vertikalen erlauben.

Auch in der Druckschrift DE 41 41 128 C2 wird ein Zahnimplantat mit einem Basisträger und mit einem Aufbaupfosten beschrieben, der Träger einer Sekundärkrone ist. Der Aufbaupfosten besitzt Konusform, wobei die Sekundärkrone mit einem komplementär geformten Innenkonus versehen ist, der in Einbauposition flächig an der Mantelfläche des Aufbaupfostens anliegt. Um im Falle verbundener Doppelkronen mit zwei zusammenhängenden Zahnimplantaten auch bei winklig eingesetzten Implantaten eine gemeinsame Einschubrichtung realisieren zu können, besitzt der Aufbaupfosten eine Innenbohrung, die gegenüber der Längsachse des Aufbaupfostens geneigt ist und zur festen Verbindung mit dem Basisträger auf eine in der Längsachse des Basisträgers liegende Schraube aufsetzbar ist. Durch eine Rotation des Aufbaupfostens kann die gewünschte Winkellage eingestellt werden.

Problematisch ist aber ein nachträgliches Lösen und Wiederaufsetzen des Aufbaupfostens auf den Basisträger, da die Winkellage des Aufbaupfostens exakt wieder aufgefunden werden muss. Aufgrund der Konusform des Aufbaupfostens ist es nicht möglich, die Sekundärkrone auch bei lediglich geringen Abweichungen von der optimalen Winkellage in der gewünschten Einschubrichtung zu verschieben.

Die DE 41 10 789 A1 zeigt ein Zahnimplantat mit einem inneren Konuselement, dessen Außenmantel eine Haftfläche für eine aufzusetzende Sekundärhülse bildet. Zwischen dem in den Kiefer einzusetzenden Basisträger und der Zahnverblendung sind ein unterer Aufbaupfosten (bzw. eine Primärkrone) und eine darauf aufgesetzte Sekundärkrone vorgesehen, wobei die Sekundärkrone Träger der Zahnverblendung ist.

Verschiedenen Winkellagen müssen bei der DE 41 10 789 A1 mithilfe einer abgeschrägten Fläche am Basiskörper realisiert werden, auf den der Aufbaupfosten aufgesetzt wird. Dies bedeutet, dass bereits der verhältnismäßig tief sitzende Aufbaupfosten stark unterschiedliche Winkellagen in Bezug auf den im Kiefer sitzenden Basisträger einnimmt, was zur Folge hat, dass diese von der Vertikalen abweichenden Winkellagen mit zunehmender Höhe eine entsprechend zunehmende Querabweichung zur Folge haben.

Die in der US 5,439,380 dargestellten Implantatteile bestehen aus einem in den Kiefer des Patienten einzusetzenden Basisträger, auf den ein Aufbaupfosten aufgesetzt wird, welcher Träger einer Zahnkrone ist. Dieser Träger kann schiefwinklig auf den Basisträger aufgesetzt werden, um verschiedene Winkelkonfigurationen zwischen den Längsachsen von Basisträger und Aufbaupfosten und damit auch der Zahnkrone zu realisieren. Die Verbindung zwischen dem Aufbaupfosten und dem Basisträger erfolgt mittels einer Schraubverbindung, wofür der Aufbaupfosten als Hülse mit durchgehender axialer Ausnehmung ausgebildet ist, in die die Schraube eingeführt wird.

Die Mantelfläche des Aufbaupfostens besitzt eine konische Gestalt, die dazu dient, die Zahnkrone auf den Aufbaupfosten aufstecken zu können, wobei die Verbindung mittels Einzementieren erfolgt.

Der Erfindung liegt das Problem zugrunde, ein Zahnimplantat zu schaffen, welches auch bei einer schiefwinkligen Position des Zahnimplantates ein vertikales Aufsetzen und Abziehen eines Implantatteiles gegenüber einem zweiten Implantatteil erlaubt.

Dieses Problem wird erfindungsgemäß mit den Merkmalen des Anspruches 1 gelöst. Die Unteransprüche geben zweckmäßige Weiterbildungen an.

Ein Implantatteil besitzt einen Grundkörper mit mindestens zwei sich jeweils über einen Teilumfangsabschnitt erstreckenden Sektoren, wobei ein Sektor als Friktionskonussektor ausgeführt ist und eine konische Geometrie aufweist. Dieser Friktionskonussektor nimmt bei eingesetztem Zahnimplantat eine lösbare und kraftschlüssige Verbindung mit dem zweiten Implantatteil ein.

Des Weiteren ist vorgesehen, dass der zweite Sektor bezüglich seiner Form und/oder seiner Positionierung in Bezug auf die Längsachse des Grundkörpers von dem Friktionskonussektor abweicht. Der zweite Sektor besitzt eine Aussparung, die in Bezug auf eine konusförmige, rotationssymmetrische Einhüllende durch die Mantelfläche des Friktionskonussektors entweder radial nach innen oder radial nach außen versetzt ist, je nachdem, ob das die beiden verschiedenen Sektoren aufweisende Bauteil von dem anderen Bauteil umgriffen wird oder dieses andere Bauteil umgreift. Aufgrund dieser Aussparung nehmen die Einhüllende durch die Mantelfläche des Friktionskonussektors und eine Verbindungslinie zwischen dem oberen und dem unteren Rand an dem die Aussparung aufweisenden zweiten Sektor gegenüber der Längsachse des Implantatteils unterschiedliche Winkel ein.

Für den Fall, dass das Bauteil mit den zwei unterschiedlichen Sektoren von dem zweiten Bauteil umgriffen wird, befindet sich die Aussparung zwischen der Längsachse des Grundkörpers und der konusförmigen, rotationssymmetrischen Einhüllenden durch die Mantelfläche des Friktionskonussektors. Der zweite Sektor ist gegenüber der Einhüllenden des Friktionskonussektors in Richtung der Längsachse zurückgesetzt, wodurch die Aussparung zustande kommt. Diese Aussparung ermöglicht ein Aufsetzen und Entfernen des mit dem ersten Implantatteil zusammenwirkenden Implantatteils in einer Richtung, welche von der Grundkörper-Längsachse des ersten Implantatteiles abweicht. Die Einschub- bzw. Löserichtung des zweiten Implantatteiles fällt auch nicht zwangsläufig mit der Längsachse des zweiten Implantatteiles zusammen.

Die Aussparung im Bereich des zweiten Sektors, dem die Funktion eines Ausgleichssektors zukommt, wird beispielsweise dadurch geschaffen, dass dieser zweite Sektor im Bereich des unteren Grundkörperrand in Richtung der Längsachse zurückgesetzt ist, wodurch an diesem zweiten Sektor eine untere Schulter gebildet ist. In dieser Ausführung weist die untere Schulter im Bereich des zweiten Sektors den gleichen Radius auf wie im Bereich des ersten, als Friktionskonussektor ausgebildeten Abschnittes. Möglich ist aber auch, dass der untere Grundkörperrand im Bereich des zweiten Sektors einen kleineren Radius aufweist als im Bereich des ersten Sektors.

Die Aussparung kann auch dadurch erreicht werden, dass der zweite Sektor im Bereich des oberen Grundkörperrandes zurückgesetzt ist und gegenüber dem Winkelsegment des ersten Sektors einen kleineren Radius aufweist.

Bei einem zurückgesetzten unteren und oberen Grundkörperrand im Bereich des zweiten Sektors können beide Sektoren gegenüber der Grundkörper-Längsachse gleich große Neigungswinkel aufweisen. Gemäß einer weiteren vorteilhaften Ausführung kann aber auch vorgesehen sein, dass die Mantelfläche beider Sektoren gegenüber der Längsachse unterschiedliche Winkel einschließen. In diesem Fall ermöglichen die unterschiedlichen Neigungswinkel ein Aufsetzen und Entfernen des mit dem ersten Implantatteils zusammenwirkenden zweiten Implantatteils in eine von der Grundkörper-Längsachse des ersten Implantatteils abweichenden Richtung.

Aufgrund der Aussparung im Bereich des zweiten Sektors können Zahnimplantate mit ihrem Basiskörper in einer schiefwinkligen Position in den Kiefer des Patienten eingesetzt werden, wobei es trotz der schiefwinkligen Lage des Basiskörpers möglich ist, zumindest die aufzusetzende Krone vertikal auf das Implantat bzw. einen Aufbaupfosten des Zahnimplantates aufzusetzen bzw. von diesem zu lösen. Kollisionen mit angrenzenden Zähne oder dergleichen sind nicht zu befürchten.

Ein weiterer Vorteil ist darin zu sehen, dass auch im Falle einer nachträglichen Änderung des Zahnimplantates, beispielsweise für den Fall eines unbeabsichtigten Lösens der Krone oder des Aufbaupfostens, die gewünschte Einbaulage jederzeit wieder hergestellt werden kann, ohne dass dies einen zusätzlichen Aufwand erfordert. Eine punktgenaue Ausrichtung nach dem Abziehen und Wiederaufsetzen der Krone ist einerseits möglich, andererseits aber für eine sichere Verbindung unter Beibehaltung einer Winkeldivergenz zwischen Implantatlängsachse und Einschubrichtung nicht zwingend erforderlich, da jeder Sektor sich über einen größeren Umfangswinkel erstreckt und bei einer um lediglich wenige Grad verdrehten Position der Krone ein kollisionsfreies Aufsetzen in der Regel nach wie vor möglich ist.

Grundsätzlich können zwei verschiedene Implantatteile in einem Zahnimplantat mittels der unterschiedlichen Sektoren auf einem der beiden Implantatteile kraftschlüssig und zugleich lösbar miteinander verbunden werden, wobei auch im Falle einer schiefwinkligen Position eines der Implantatteile das jeweils andere Implantatteil vertikal bzw. gerade aufgesetzt und abgezogen werden kann. Das Implantatteil mit den beiden unterschiedlichen Sektoren kann sowohl auf der dem Kiefer des Patienten zugewandten Seite als auch auf der dem Kiefer abgewandten Seite angeordnet sein.

Bei dem mit zwei unterschiedlichen Sektoren ausgestatteten Implantatteil handelt es sich zweckmäßig um einen Aufbaupfosten eines Zahnimplantates, welcher zwischen einem in den Kiefer einzusetzenden Basiskörper und einer im sichtbaren Bereich liegenden Sekundärkrone im Zahnimplantat angeordnet ist, wobei die Sekundärkrone das zweite Implantatteil darstellt, welches mit einer Winkeldivergenz gegenüber der Längsachse des Aufbaupfostens auf diesen aufgesetzt werden kann.

Umgekehrt kann es sich bei dem mit zwei unterschiedlichen Sektoren ausgestatteten Implantatteil aber auch um die Sekundärkrone handeln, die mit dem Aufbaupfosten verbunden wird, welcher auf den Basiskörper aufgesetzt wird.

Das Implantatteil, insbesondere der Aufbaupfosten, kann im Bereich einer Stirnseite einen axial überstehenden Mehrkant-Verbindungsabschnitt besitzen, beispielsweise einen Sechskant-Verbindungsabschnitt, welcher in eine komplementär geformte Ausnehmung im benachbarten Bauteil des Zahnimplantates - üblicherweise in den Basiskörper - einsetzbar ist. Diese Mehrkantverbindung erlaubt nur eine begrenzte Anzahl an Winkellagen des betreffenden Implantatteiles, wobei die Winkellagenanzahl von der Anzahl der Kanten des Mehrkants abhängt. Im Beispielfall eines Sechskants kann das Implantatteil, welches mit einem derartigen Sechskant ausgestattet ist, in sechs verschiedenen Winkellagen eingesetzt werden, die sich um 60° unterscheiden. Für den Fall einer nachträglichen Bearbeitung des Zahnimplantates, bei der das Implantatteil herausgenommen und nachbearbeitet werden muss, ist ein Wiedereinsetzen in der gewünschten Winkellage ohne weiteres möglich, weil die asymmetrische Ausbildung aufgrund der unterschiedlich geformten Sektoren am Grundkörper des Implantatteils ausreichende Anhaltspunkte dafür bieten, die korrekte 60°-Winkelposition wieder aufzufinden.

Einem der Sektoren kommt die Funktion eines Friktionskonussektors zu, welcher eine konische Geometrie besitzt mit einem Konuswinkel, der zweckmäßig in einem Winkelbereich zwischen 1° und 9°, insbesondere bei 4° liegt. Der Friktionskonussektor sorgt für eine reibbehaftete Verbindung zu dem angrenzenden Implantatteil, indem eine komplementär geformte Anlagefläche des angrenzenden Implantatteiles flächig auf dem Friktionskonussektor aufliegt und mit diesem eine reibschlüssige Verbindung bildet. Zweckmäßig erstreckt sich der Friktionskonussektor in Umfangsrichtung über mindestens 180° des Grundkörpers, damit eine ausreichend große Reibfläche und damit eine Verbindung mit hinreichend großem Kraftschluss gegeben ist.

Dem zweiten Sektor kommt die Funktion eines Ausgleichssektors zu, welcher aufgrund seiner unterschiedlichen Winkelneigung den Ausgleich der Winkeldivergenz zwischen Längsachse des Grundkörpers und Einschub- bzw. Ausschubrichtung ermöglicht.

Dieser Ausgleichssektor kann in einer ersten vorteilhaften Ausführung ebenfalls eine konische Geometrie aufweisen, wobei der Neigungswinkel sowohl größer als auch kleiner sein kann als der Neigungswinkel des Friktionskonussektors. Zweckmäßig ist aber der Neigungswinkel größer und liegt in einem Winkelbereich zwischen 15° und 20°.

Gemäß einer zweiten, alternativen vorteilhaften Ausführung ist der Ausgleichssektor zylindrisch ausgebildet, so dass die Mantelfläche des Ausgleichssektors parallel zur Längsachse des Grundkörpers liegt.

Entscheidend für den Ausgleich der Winkeldivergenz zwischen Einschubrichtung und Implantatlängsachse ist der Winkelunterschied zwischen den beiden Sektoren. Beträgt beispielsweise der Neigungswinkel des Friktionskonussektors 4° und der Neigungswinkel des ebenfalls konusförmig ausgebildeten Ausgleichssektors 15°, so ist im Vergleich zu einer rotationssymmetrischen Ausführung mit einheitlich 4° Neigungswinkel ein Ausgleich von zusätzlichen 11° Winkelneigung möglich. Bei einer rotationssymmetrischen Ausbildung mit einheitlich 4° wäre lediglich eine Winkeldivergenz von plus/minus 4° gegenüber der Längsachse auszugleichen. Beim erfindungsgemäßen Implantatteil kann dagegen bei 4° Neigungswinkel des Friktionskonussektors und 15° Neigungswinkel des Ausgleichssektors der Einschubwinkel um bis zu 19° divergieren.

Beide Sektoren können sich in Achsrichtung gesehen jeweils vom oberen Grundkörperrand bis zum unteren Grundkörperrand erstrecken. Möglich ist aber auch eine Erstreckung über einen axialen Teilabschnitt des Grundkörpers. Jeder Sektor kann sich also entweder über die gesamte axiale Länge des Grundkörpers oder lediglich über einen Teilabschnitt des Grundkörpers erstrecken, wobei auch Mischformen in Betracht kommen, bei denen ein Sektor sich über die gesamte Länge und der benachbarte Sektor sich nur über eine Teillänge erstreckt.

In den Übergangsbereich zwischen den benachbarten Sektoren ist vorteilhaft eine axial verlaufende Nut eingebracht, deren Wölbung gegenläufig zur Wölbung der jeweils angrenzenden Sektoren ausgebildet ist. Diese Nut bzw. diese beiden Nuten im Bereich der beiden Übergänge zwischen den Sektoren bilden eine Hinterschneidung, welche zusätzlichen Halt für das aufzusetzende Implantatteil bietet.

Vorteilhaft wird der Aufbaupfosten innerhalb eines Zahnimplantates in der erfindungsgemäßen Weise mit einem Grundkörper mit mindestens zwei Sektoren ausgebildet. Es kann aber auch zweckmäßig sein, den Aufbaupfosten rotationssymmetrisch auszuführen und die auf den Aufbaupfosten aufzusetzende Krone im Bereich ihrer Ausnehmung mit zwei Sektoren mit unterschiedlichem Neigungswinkel auszustatten.

Weitere Vorteile und zweckmäßige Ausführungen sind den weiteren Ansprüchen, der Figurenbeschreibung und den Zeichnungen zu entnehmen. Es zeigen:
- Fig. 1: einen Schnitt durch ein Zahnimplantat mit einem in den Kiefer einzusetzenden Basisträger, einem mithilfe einer Schraube auf dem Basisträger befestigten Aufbaupfosten, welcher mit zwei Sektoren mit unterschiedlichem Neigungswinkel ausgestattet ist, sowie mit einer auf dem Aufbaupfosten aufgesetzten Zahnkrone,
- Fig. 2: eine Kombination von zwei beabstandeten, über eine Brücke verbundenen Implantatteilen, deren Längsachsen schiefwinklig zueinander angeordnet sind,
- Fig. 3: eine perspektivische Ansicht eines Aufbaupfostens mit zwei unterschiedlichen Sektoren, die jeweils eine konische Geometrie, jedoch mit unterschiedlichem Neigungswinkel besitzen,
- Fig. 4: einen Schnitt durch den Aufbaupfosten nach Fig. 3, einschließlich einer aufgesetzten Krone,
- Fig. 5: einen Aufbaupfosten in einer weiteren Ausführung, gemäß der der Ausgleichssektor am Grundkörper des Aufbaupfostens zylindrisch ausgebildet ist,
- Fig. 6: einen Schnitt durch den Aufbaupfosten nach Fig. 5, einschließlich einer aufgesetzten Krone,
- Fig. 7: einen Aufbaupfosten in einer weiteren Ausführung mit einem nutförmigen, axial verlaufenden Übergangsbereich zwischen aneinander grenzenden Sektoren,
- Fig. 8: eine Draufsicht auf den Aufbaupfosten nach Fig. 7,
- Fig. 9: einen Aufbaupfosten in einer weiteren Ausführung, gemäß der die beiden Sektoren sich nur über einen axialen Teilabschnitt des Grundkörpers des Aufbaupfostens erstrecken.
- Fig. 10: einen Aufbaupfosten in einer weiteren Ausführung, gemäß der der Ausgleichssektor sich nur über einen axialen Teilabschnitt, der Friktionskonussektor sich dagegen über die gesamte axiale Länge des Grundkörpers erstreckt,
- Fig. 11: eine Draufsicht auf einen Aufbaupfosten in einer weiteren Ausführung, in der ein Segment des Ausgleichssektors ausgefräst ist, so dass der Grundkörper des Aufbaupfostens im Bereich des Ausgleichssektors geradlinig abfällt und der Ausgleichssektor als schiefe Ebene ausgebildet ist,
- Fig. 12: einen Schnitt durch einen rotationssymmetrisch ausgebildeten Aufbaupfosten mit einer aufgesetzten Zahnkrone, deren Ausnehmung zwei unterschiedliche Sektoren aufweist,
- Fig. 13: eine Draufsicht auf zwei beabstandete Implantatteile, deren Friktionskonussektoren auf gegenüberliegenden Seiten liegen, wobei sich jeder Friktionskonussektor über einen Winkelbereich kleiner 180° am betreffenden Aufbaupfosten erstreckt,
- Fig. 14: einen Aufbaupfosten in einer weiteren Ausführung, gemäß der der Ausgleichssektor am Grundkörper des Aufbaupfostens den gleichen Neigungswinkel wie der Friktionskonussektor aufweist, jedoch gegenüber der Einhüllenden durch die Mantelfläche des Friktionskonussektors zurückgesetzt ist,
- Fig. 15: einen Schnitt durch den Aufbaupfosten nach Fig. 14, einschließlich einer aufgesetzten Krone,
- Fig. 16: einen Schnitt durch den Aufbaupfosten nach Fig. 14, ohne aufgesetzte Krone.

In den Figuren sind gleiche Bauteile mit gleichen Bezugszeichen versehen.

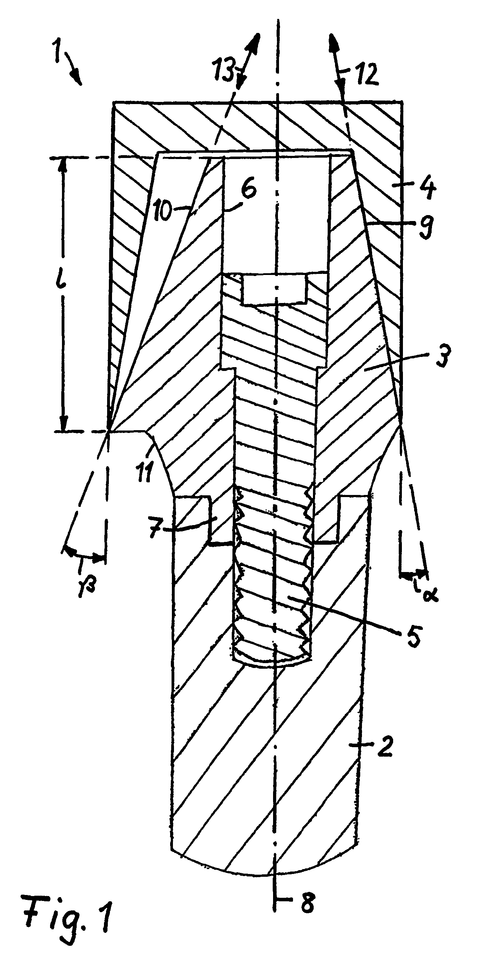

Das in der Fig. 1 dargestellte Zahnsegment bzw. Zahnimplantat 1 umfasst einen in den Kiefer des Patienten einzusetzenden Basisträger 2, einen Aufbaupfosten 3 sowie eine Zahnkrone 4. Alle Bauteile des Zahnimplantates 1 weisen eine gemeinsame Längsachse 8 auf. Der Aufbaupfosten 3, welcher auch Primärkrone genannt wird, wird auf den Basisträger 2 aufgesetzt und mit diesem über eine Verbindungsschraube 5 fest verbunden, welche in eine zentrische Ausnehmung 6 im Aufbaupfosten 3 eingesetzt ist und deren unterer Abschnitt in ein Gewinde in einer komplementären Ausnehmung im Basisträger 2 eingreift. Zur besseren Montage besitzt der Aufbaupfosten 3 im Bereich seiner unteren Stirnseite einen Mehrkant-Verbindungsabschnitt 7, welcher insbesondere als Sechskant-Verbindungsabschnitt ausgeführt ist und in eine komplementär geformte Ausnehmung in der zugewandten Stirnseite des Basisträgers 2 eingesetzt ist. Der Verbindungsabschnitt 7 kann gegebenenfalls auch als konusförmiger oder als zylindrischer Absatz ausgeführt sein.

Die Krone 4 ist kraftschlüssig, insbesondere reibschlüssig mit dem Aufbaupfosten 3 verbunden. Die Krone ist rotationssymmetrisch ausgebildet. Der Aufbaupfosten 3 weist dagegen eine von der Rotationssymmetrie abweichende Geometrie auf und besitzt insbesondere zwei die Mantelfläche bildende Sektoren 9 und 10, die sich jeweils über einen Teilbereich in Umfangsrichtung erstrecken, wobei der eine Sektor 9 die Funktion eines Friktionskonussektors hat und dem zweiten Sektor 10 die Funktion eines Ausgleichssektors zukommt. Der Friktionskonussektor 9 besitzt in jedem Fall eine konische Geometrie, wohingegen der Ausgleichssektor 10 gegebenenfalls auch eine konische Geometrie, aber auch eine hiervon abweichende Geometrieform besitzen kann. In den Fig. 1 bis 4 weist der Ausgleichssektor 10 eine konische Geometrie auf.

Axial erstrecken sich die beiden Sektoren 9 und 10 über die gesamte Länge des Grundkörpers des Aufbaupfostens, welcher sich von der der Krone 4 zugewandten Stirnseite bis zu einem Sockelabschnitt 11 erstreckt und die Länge l besitzt. Die Mantelfläche der beiden Sektoren 9 und 10 schließt gegenüber der Längsachse 8 jeweils einen unterschiedlichen Winkel ein. Der Winkel α des Friktionskonussektors 9 liegt zweckmäßig in einem Winkelbereich zwischen 1° und 9° und kann beispielsweise den Wert von 4° einnehmen. Dagegen nimmt der Winkel β, mit welchem der Winkel zwischen der Mantelfläche des Ausgleichssektors 10 und der Längsachse 8 bezeichnet ist, einen größeren Wert ein, der Winkel β liegt vorzugsweise in einem Winkelbereich zwischen 15° und 20°.

Den Winkeln α und β von Friktionskonussektor 9 bzw. Ausgleichssektor 10 entsprechend ist auch die mit den Pfeilrichtungen 12 und 13 eingetragene Einschub- bzw. Ausschubrichtung der Krone 4 auf den Aufbaupfosten 3 festgelegt. Die Einschub- bzw. Ausschubrichtung darf gegenüber der Längsachse 8 zur einen Seite gemäß Pfeilrichtung lediglich maximal den Winkel α einnehmen und zur anderen Seite gemäß Pfeilrichtung 13 maximal den Winkel β. Selbstverständlich sind auch sämtliche Zwischenpositionen zwischen den eingetragenen Winkeln bzw. Pfeilrichtungen 12 und 13 möglich, insbesondere auch eine Einschub- und Ausschubrichtung parallel zur Längsachse 8.

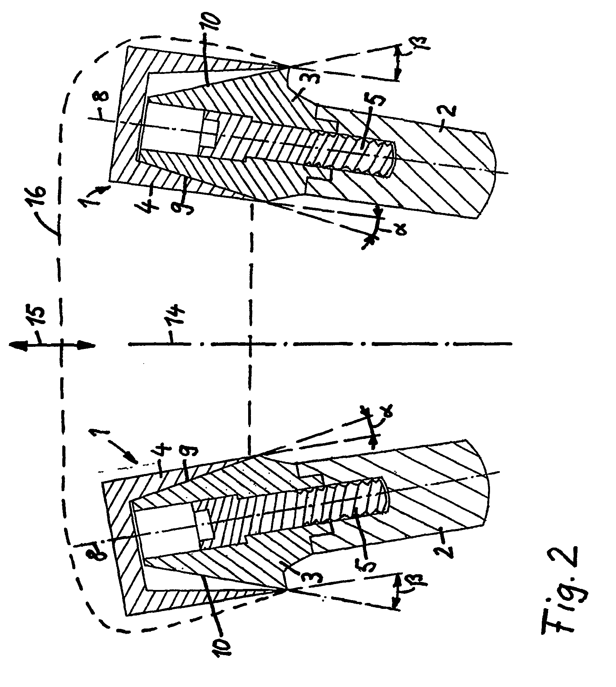

In Fig. 2 ist eine Kombination von zwei Zahnimplantaten 1 dargestellt, deren Kronen 4 über eine gemeinsame Brücke 16 miteinander verbunden sind. Die Längsachsen 8 der beiden Zahnimplantate schließen mit einer Vertikalen 14 jeweils einen Winkel ein, wobei die Winkel sich unterscheiden können. Die Ausgleichssektoren 10 an den jeweiligen Aufbaupfosten 3 liegen auf gegenüberliegenden, abgewandten Seiten, die Friktionskonussektoren 9 befinden sich dagegen an einander zugewandten Seiten. Aufgrund dieser Konfiguration ist trotz der schiefwinkligen Lage beider Zahnimplantate 1 ein Einschieben bzw. Ausschieben der gemeinsamen Brücke oder Prothese 16 einschließlich der daran gehaltenen Kronen 4 in Pfeilrichtung 15 parallel zur Vertikalen 14 möglich. Die beiden Zahnimplantate 1 dürfen gegenüber der Vertikalen 14 um maximal dem Winkel β geneigt sein, welcher den Neigungswinkel zwischen der Mantelfläche des Ausgleichssektors und der Längsachse 8 des Zahnimplantates bezeichnet.

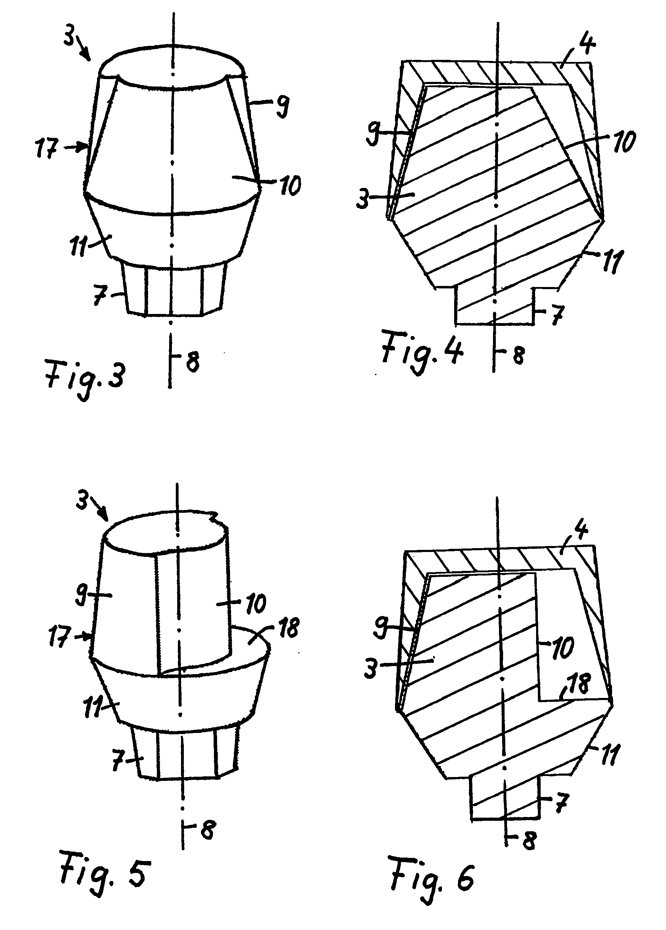

Der Aufbaupfosten 3 ist in Fig. 3 in perspektivischer Darstellung gezeigt. Die beiden Sektoren 9 und 10 erstrecken sich über die axiale Länge des Grundkörpers 17, welcher im unteren Bereich über den Sockelabschnitt 11 mit dem Mehrkant-Verbindungsabschnitt 7 verbunden ist. Wie der zugehörigen Schnittdarstellung nach Fig. 4 zu entnehmen, welche zusätzlich eine aufgesetzte Krone 4 zeigt, ist zwischen der Mantelfläche des Ausgleichssektors 10 und der zugewandten Innenmantelfläche in der Ausnehmung der Krone 4 ein in der Schnittdarstellung keilförmiger Spalt gegeben, welcher daraus resultiert, dass die Ausnehmung in der Krone 4 rotationssymmetrisch ausgebildet ist und einen Winkel entsprechend dem Friktionskonussektor 9 besitzt, wobei dieser Winkel steiler ist als der verhältnismäßig flache Winkel im Bereich des Ausgleichssektors 10.

Das Ausführungsbeispiel gemäß den Fig. 5 und 6 entspricht im Wesentlichen demjenigen der Fig. 3 und 4, jedoch mit dem Unterschied, dass der Ausgleichssektor 10 zylindrisch ausgeführt ist, wodurch auf der oberen Stirnseite des Sockelabschnittes 11 eine Schulter 18 gebildet ist. Der Durchmesser des zylindrischen Ausgleichssektors 10 ist kleiner als der kleinere Konusdurchmesser des Friktionskonussektors 9 im Bereich der freien Stirnseite.

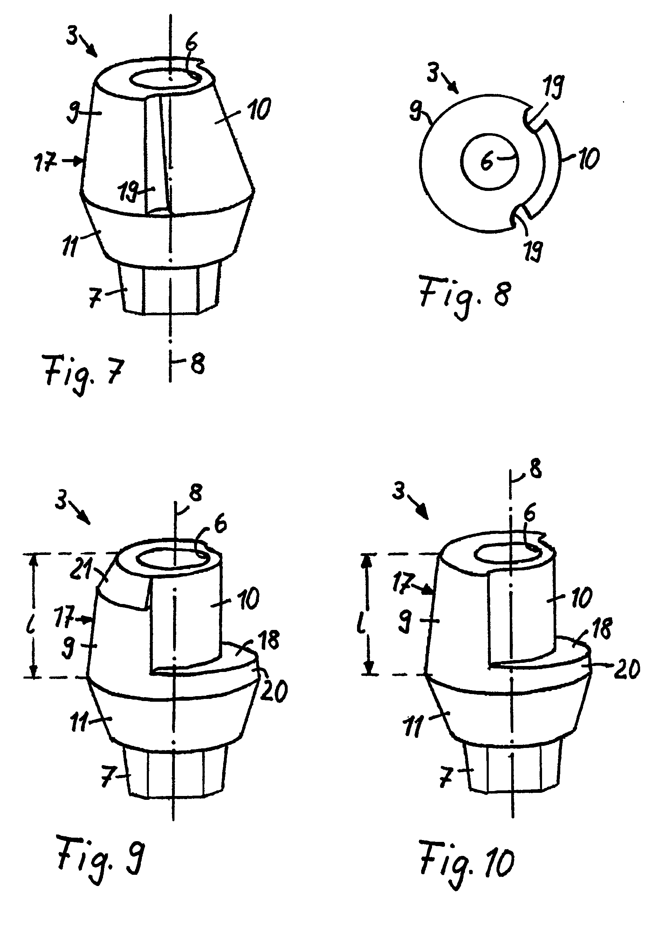

In Fig. 7 und 8 ist ein weiteres Ausführungsbeispiel für einen Aufbaupfosten 3 gezeigt, bei dem im Übergang zwischen dem Friktionskonussektor 9 und dem Ausgleichssektor 10 eine in Achsrichtung verlaufende Nut 19 eingebracht ist, wodurch eine Hinterschneidung gebildet ist, die für einen besseren Halt der aufzusetzenden Krone sorgt. Die Nut 19 besitzt eine gegenüber den Sektoren 9 und 10 gegenläufige Wölbung. In diese Wölbung greift eine komplementär geformte innere Mantelfläche der aufzusetzenden Krone ein.

Im Ausführungsbeispiel gemäß Fig. 9 erstrecken sich die Sektoren 9 und 10 nicht über die gesamte axiale Länge des Grundkörpers 17, sondern lediglich über eine Teillänge. Die gesamte axiale Länge des Grundkörpers 17 ist mit 1 bezeichnet, demgegenüber erstreckt sich der Friktionskonussektor 9 vom unteren Abschnitt des Grundkörpers 17 ausgehend über eine Teillänge des Grundkörpers 17, wobei zwischen dem oberen Ende des Sektors 9 und der Stirnseite des Grundkörpers 17 ein Übergangsabschnitt 21 mit abgeschrägter Mantelfläche gebildet ist.

Auch der Ausgleichssektor 10 erstreckt sich nur über eine Teillänge des Grundkörpers 17. Der Ausgleichssektor 10 ist mit dem unteren Rand des Grundkörpers 17 über einen Übergangsabschnitt 20 verbunden und erstreckt sich nach oben bis zur freien Stirnseite des Grundkörpers. Der Ausgleichssektor 10 besitzt Zylinderform.

Fig. 10 entspricht im Wesentlichen Fig. 9, jedoch mit dem Unterschied, dass der Friktionskonussektor 9 sich über die gesamte axiale Länge 1 des Grundkörpers 17 erstreckt, wohingegen der zylindrische Ausgleichssektor 10 wie beim vorangegangenen Ausführungsbeispiel sich lediglich über eine axiale Teillänge des Grundkörpers erstreckt.

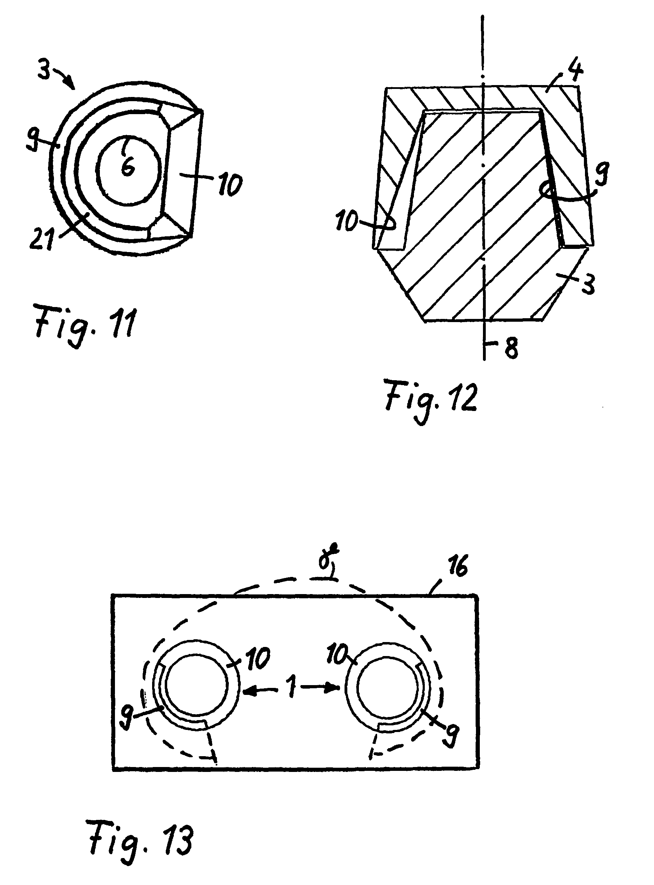

Im Ausführungsbeispiel gemäß Fig. 11 ist der Ausgleichssektor 10 als plane, schräg abfallende Ebene ausgeführt, was dadurch erreicht wird, dass ein Segment des Aufbaupfostens 3 im Bereich des Ausgleichssektors abgefräst wird. Dadurch besitzt der Aufbaupfosten 3 keine runde Querschnittsgestalt mehr. Der Ausgleichssektor 10 ist in sich plan ausgeführt.

Im Ausführungsbeispiel nach Fig. 12 ist die Krone 4 mit zwei unterschiedlichen Sektoren 9 und 10 im Bereich ihrer Innenmantelfläche ausgeführt, wohingegen der Aufbaupfosten 3 rotationssymmetrisch zur Längsachse 8 ausgebildet ist. Grundsätzlich kann mit dieser Konfiguration der gleiche Effekt erzielt werden wie mit den vorangegangenen Ausführungsbeispielen.

Wie in Fig. 13 dargestellt, kann es bei einer Kombination von zwei einzelnen Zahnimplantaten 1, welche über eine verbindende Brücke oder Prothese 16 gekoppelt sind, ausreichend sein, die Friktionskonussektoren 9 auf abgewandten Seiten der jeweiligen Aufbaupfosten vorzusehen, wobei sich jeder einzelne Friktionskonussektor über einen Winkelabschnitt kleiner 180° in Umfangsrichtung des jeweiligen Aufbaupfostens erstreckt. Aufgrund der Verbindung über die gemeinsame Brücke oder Prothese 16 nimmt jedoch eine gedachte Einhüllende beider Zahnimplantate 1, welche die jeweiligen Friktionskonussektoren 9 einschließt, einen Winkel γ von mehr als 180° ein. Aufgrund der Umschließung von mehr als 180° ist eine fest sitzende Verbindung zwischen der Brücke oder Prothese 16 bzw. der mit der Brücke verbundenen Kronen und den darunter liegenden Aufbaupfosten der beiden Zahnimplantate gegeben.

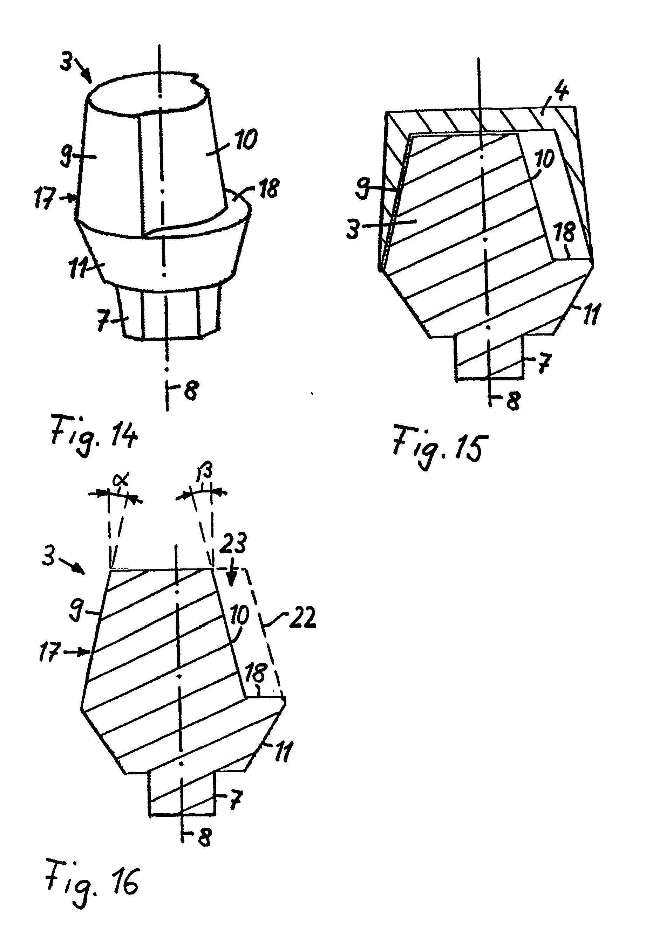

In den Fig. 14 bis 16 ist ein weiteres Ausführungsbeispiel für einen Aufbaupfosten 3 gezeigt. In diesem Ausführungsbeispiel besitzt der Ausgleichssektor 10 den gleichen Neigungswinkel β gegenüber der Grundkörper-Längsachse 8 wie der Friktionskonussektor 9 mit dem Winkel α. Erreicht wird dies dadurch, dass der Ausgleichssektor 10 sowohl im Bereich des unteren Grundkörperrandes als auch im Bereich des oberen Grundkörperrandes radial nach innen in Richtung Grundkörper-Längsachse 8 zurückgesetzt ist, wodurch zwischen der Mantelfläche des Ausgleichssektors 10 und einer Einhüllenden 22 durch die Mantelfläche des Friktionskonussektors 9 eine Aussparung 23 gegeben ist. Die Einhüllende 22 besitzt die gleiche Konusform wie der Friktionskonussektor 9. Aufgrund der identischen Neigungswinkel α und β für den Friktionskonussektor 9 und den Ausgleichssektor 10 ist letzterer sowohl im Bereich des oberen Grundkörperrandes als auch im Bereich des unteren Grundkörperrandes - benachbart zum Sockelabschnitt 11 - im gleichen Maße gegenüber der Einhüllenden 22 in Richtung Grundkörperlängsachse 8 zurückgesetzt.

Als Alternative kommt aber auch ein unterschiedlicher Betrag in Frage, um den die Mantelfläche des Ausgleichssektors 10 gegenüber der Einhüllenden im oberen und unteren Bereich zurückgesetzt ist. In diesem Fall stimmen aber die Neigungswinkel α und β nicht mehr überein, sondern nehmen unterschiedliche Werte ein. Möglich sind sowohl größere als auch kleinere Neigungswinkel β des Ausgleichssektors 10 im Vergleich zum Neigungswinkel α des Friktionskonussektors 9, solange gewährleistet ist, dass gegenüber der Einhüllenden 22 eine Aussparung 23 gegeben ist.

## Patentansprüche

1. Zahnimplantat mit zwei als Primärkrone (3) und Sekundärkrone (4) ausgebildeten Implantatteilen, die lösbar zu verbinden sind, wobei ein Implantatteil (3) einen konusförmigen Grundkörper (17) mit einem Friktionskonussektor (9) mit konischer Geometrie aufweist, der mit dem anderen Implantatteil (4) lösbar und reibschlüssig zu verbinden ist,
**dadurch gekennzeichnet,**
**dass** der Grundkörper (17) des Implantatteils (3) mindestens einen weiteren Sektor (10) aufweist, der als Ausgleichssektor (10) in Bezug auf eine konusförmige und rotationssymmetrische Einhüllende (22) durch die Mantelfläche des Friktionskonussektors (9) eine Aussparung (23) aufweist, und
**dass** die Einhüllende (22) durch die Mantelfläche des Friktionskonussektors (9) und eine Verbindungslinie zwischen dem oberen und dem unteren Rand an dem die Aussparung (23) aufweisenden Ausgleichssektor (10) gegenüber der Längsachse (8) des Implantatteils (3) unterschiedliche Winkel einnehmen.

2. Zahnimplantat nach Anspruch 1,
**dadurch gekennzeichnet,**
**dass** der Ausgleichssektor (10) benachbart zum unteren Bauteilrand in Richtung der Längsachse (8) zurückgesetzt ist, wodurch am Ausgleichssektor (10) eine untere Schulter (18) gebildet ist.

3. Zahnimplantat nach Anspruch 1 oder 2,
**dadurch gekennzeichnet,**
**dass** der Ausgleichssektor (10) benachbart zum oberen Bauteilrand zurückgesetzt ist.

4. Zahnimplantat nach einem der Ansprüche 1 bis 3,
**dadurch gekennzeichnet,**
**dass** der Friktionskonussektor (9) sich in Umfangsrichtung über mindestens 180° des Bauteils (17) erstreckt.

5. Zahnimplantat nach einem der Ansprüche 1 bis 4,
**dadurch gekennzeichnet,**
**dass** der Neigungswinkel (α) des Friktionskonussektors (9) in einem Winkelbereich zwischen 1° und 9° liegt.

6. Zahnimplantat nach Anspruch 5,
**dadurch gekennzeichnet,**
**dass** der Neigungswinkel (α) des Friktionskonussektors (9) 4° beträgt.

7. Zahnimplantat nach einem der Ansprüche 1 bis 5,
**dadurch gekennzeichnet,**
**dass** der Ausgleichssektor (10) konisch ausgebildet ist.

8. Zahnimplantat nach Anspruch 7,
**dadurch gekennzeichnet,**
**dass** der Ausgleichssektor (10) gegenüber der Bauteil-Längsachse (8) einen größeren Neigungswinkel (β) einschließt als der Friktionskonussektor (9).

9. Zahnimplantat nach Anspruch 8,
**dadurch gekennzeichnet,**
**dass** der Neigungswinkel (β) in einem Winkelbereich zwischen 15° und 20° liegt.

10. Zahnimplantat nach einem der Ansprüche 1 bis 6,
**dadurch gekennzeichnet,**
**dass** der Ausgleichssektor (10) zylindrisch ausgeführt ist, wobei die Mantelfläche des Ausgleichssektors (10) parallel zur Bauteil-Längsachse (8) liegt.

11. Zahnimplantat nach einem der Ansprüche 1 bis 10,
**dadurch gekennzeichnet,**
**dass** mindestens ein Sektor (9, 10) sich axial jeweils vom oberen Bauteilrand bis zum unteren Bauteilrand erstreckt.

12. Zahnimplantat nach einem der Ansprüche 1 bis 11,
**dadurch gekennzeichnet,**
**dass** mindestens ein Sektor (9, 10) sich nur über einen axialen Teilabschnitt des Bauteils (17) im Bereich zwischen oberem und unterem Bauteilrand erstreckt.

13. Zahnimplantat nach einem der Ansprüche 1 bis 12,
**dadurch gekennzeichnet,**
**dass** in den Mantelflächen-Übergangsbereich zwischen den beiden Sektoren (9, 10) eine axial verlaufende Nut (19) eingebracht ist.

14. Zahnimplantat nach einem der Ansprüche 1 bis 13,
**dadurch gekennzeichnet,**
**dass** im Bereich einer Stirnseite des Bauteils (17) ein axial überstehender Mehrkant-Verbindungsabschnitt (7) ausgebildet ist.

15. Zahnimplantat nach einem der Ansprüche 1 bis 14,
**dadurch gekennzeichnet,**
**dass** die Sekundärkrone (4) flächig am Friktionskonussektor (9) der Primärkrone (3) anliegt.

16. Zahnimplantat nach Anspruch 15,
**dadurch gekennzeichnet,**
**dass** die Sekundärkrone (4) rotationssymmetrisch ausgebildet ist.

17. Zahnimplantat nach einem der Ansprüche 1 bis 14,
**dadurch gekennzeichnet,**
**dass** die Sekundärkrone (4) flächig am Ausgleichssektor (10) der Primärkrone (3) anliegt.

18. Kombination von zwei beabstandeten Zahnimplantate nach einem der Ansprüche 1 bis 17, wobei die Friktionskonussektoren (9) der beiden Implantatteile (4) innerhalb einer beide Implantatteile (4) umfassenden Einhüllenden zusammengenommen einen Winkel (γ) größer als 180° einschließen.

## Claims

1. Dental implant having two implant parts which are designed as primary crown (3) and secondary crown (4) and are to be detachably connected, one implant part (3) having a conical base body (17) with a friction cone sector (9) of conical geometry, which is to be connected detachably and with frictional locking to the other implant part (4), **characterized in that** the base body (17) of the implant part (3) has at least one further sector (10) which has a cutout (23) as compensating sector (10) with reference to a conical and rotationally symmetrical envelope (22) through the lateral surface of the friction cone sector (9), and **in that** the envelope (22) through the lateral surface of the friction cone sector (9), and a connecting line between the upper and the lower edge at the compensating sector (10) having the cutout (23) assume different angles to the longitudinal axis (8) of the implant part (3).

2. Dental implant according to Claim 1, **characterized in that** adjacent to the lower component edge the compensating sector (10) is set back in the direction of the longitudinal axis (8), as a result of which a lower shoulder (18) is formed on the compensating sector (10).

3. Dental implant according to Claim 1 or 2, **characterized in that** the compensating sector (10) is set back adjacent to the upper component edge.

4. Dental implant according to one of Claims 1 to 3, **characterized in that** the friction cone sector (9) extends in a circumferential direction over at least 180° of the component (17).

5. Dental implant according to one of Claims 1 to 4, **characterized in that** the inclination angle (α) of the friction cone sector (9) lies in an angular range between 1° and 9°.

6. Dental implant according to Claim 5, **characterized in that** the inclination angle (α) of the friction cone sector (9) is 4°.

7. Dental implant according to one of Claims 1 to 5, **characterized in that** the compensating sector (10) is of conical design.

8. Dental implant according to Claim 7, **characterized in that** the compensating sector (10) encloses a larger inclination angle (β) to the component longitudinal axis (8) than does the friction cone sector (9).

9. Dental implant according to Claim 8, **characterized in that** the inclination angle (β) lies in an angular range between 15° and 20°.

10. Dental implant according to one of Claims 1 to 6, **characterized in that** the compensating sector (10) is of cylindrical design, the lateral surface of the compensating sector (10) lying parallel to the component longitudinal axis (8).

11. Dental implant according to one of Claims 1 to 10, **characterized in that** at least one sector (9, 10) extends axially respectively from the upper component edge to the lower component edge.

12. Dental implant according to one of Claims 1 to 11, **characterized in that** at least one sector (9, 10) extends in the region between upper and lower component edge only over an axial segment of the component (17).

13. Dental implant according to one of Claims 1 to 12, **characterized in that** an axially running groove (19) is inserted between the two sectors (9, 10) in the lateral surface transition region.

14. Dental implant according to one of Claims 1 to 13, **characterized in that** an axially projecting polygonal connecting section (7) is formed in the region of an end face of the component (17).

15. Dental implant according to one of Claims 1 to 14, **characterized in that** the secondary crown (4) bears flat against the friction cone sector (9) of the primary crown (3).

16. Dental implant according to Claim 15, **characterized in that** the secondary crown (4) is of rotationally symmetrical design.

17. Dental implant according to one of Claims 1 to 14, **characterized in that** the secondary crown (4) bears flat against the compensating sector (10) of the primary crown (3).

18. Combination of two spaced-apart dental implants according to one of Claims 1 to 17, in which the friction cone sectors (9) of the two implant parts (4) enclose taken together an angle (γ) of greater than 180° within an envelope comprising the two implant parts (4) .

## Revendications

1. Implant dentaire comprenant deux éléments d'implant réalisés sous la forme d'une couronne primaire (3) et d'une couronne secondaire (4), qui peuvent être connectées de manière amovible, un élément d'implant (3) présentant un corps de base (17) de forme conique avec un secteur de cône de friction (9) de géométrie conique, qui peut être connecté de manière amovible et par engagement par friction à l'autre élément d'implant (4),
**caractérisé en ce que**
le corps de base (17) de l'élément d'implant (3) présente au moins un autre secteur (10) qui présente, en tant que secteur de compensation (10), un évidement (23) par rapport à une extrémité d'enveloppement (22) conique et à symétrie de révolution par la surface d'enveloppe du secteur de cône de friction (9), et **en ce que** l'extrémité d'enveloppement (22) par la surface d'enveloppe du secteur de cône de friction (9) et une ligne de connexion entre le bord supérieur et le bord inférieur au niveau du secteur de compensation (10) présentant l'évidement (23), forment des angles différents avec l'axe longitudinal (8) de l'élément d'implant (3).

2. Implant dentaire selon la revendication 1,
**caractérisé en ce que**
le secteur de compensation (10) est en retrait à proximité du bord inférieur du composant dans la direction de l'axe longitudinal (8), de sorte qu'un épaulement inférieur (18) soit formé au niveau du secteur de compensation (10).

3. Implant dentaire selon la revendication 1 ou 2,
**caractérisé en ce que**
le secteur de compensation (10) est en retrait à proximité du bord supérieur du composant.

4. Implant dentaire selon l'une quelconque des revendications 1 à 3,
**caractérisé en ce que**
le secteur de cône de friction (9) s'étend dans la direction périphérique sur au moins 180° du composant (17).

5. Implant dentaire selon l'une quelconque des revendications 1 à 4,
**caractérisé en ce que**
l'angle d'inclinaison (α) du secteur de cône de friction (9) est compris dans une plage angulaire de 1° à 9°.

6. Implant dentaire selon la revendication 5,
**caractérisé en ce que**
l'angle d'inclinaison (α) du secteur de cône de friction (9) vaut 4°.

7. Implant dentaire selon l'une quelconque des revendications 1 à 5,
**caractérisé en ce que**
le secteur de compensation (10) est conique.

8. Implant dentaire selon la revendication 7,
**caractérisé en ce que**
le secteur de compensation (10) forme avec l'axe longitudinal (8) du composant, un plus grand angle d'inclinaison (β) que le secteur de cône de friction (9).

9. Implant dentaire selon la revendication 8,
**caractérisé en ce que**
l'angle d'inclinaison (β) est compris dans une plage angulaire de 15° à 20°.

10. Implant dentaire selon l'une quelconque des revendications 1 à 6,
**caractérisé en ce que**
le secteur de compensation (10) est cylindrique, la surface d'enveloppe du secteur de compensation (10) étant parallèle à l'axe longitudinal (8) du composant.

11. Implant dentaire selon l'une quelconque des revendications 1 à 10,
**caractérisé en ce**
**qu'**au moins un secteur (9, 10) s'étend axialement à chaque fois depuis le bord supérieur du composant jusqu'au bord inférieur du composant.

12. Implant dentaire selon l'une quelconque des revendications 1 à 11,
**caractérisé en ce**
**qu'**au moins un secteur (9, 10) s'étend uniquement sur une portion axiale partielle du composant (17) dans la région entre le bord supérieur du composant et le bord inférieur du composant.

13. Implant dentaire selon l'une quelconque des revendications 1 à 12,
**caractérisé en ce que**
l'on pratique dans la région de transition de la surface d'enveloppe entre les deux secteurs (9, 10), une rainure (19) s'étendant axialement.

14. Implant dentaire selon l'une quelconque des revendications 1 à 13,
**caractérisé en ce que**
dans la région d'un côté frontal du composant (17), on réalise une portion de connexion polygonale (7) dépassant axialement.

15. Implant dentaire selon l'une quelconque des revendications 1 à 14,
**caractérisé en ce que**
la couronne secondaire (4) s'applique à plat contre le secteur de cône de friction (9) de la couronne primaire (3).

16. Implant dentaire selon la revendication 15,
**caractérisé en ce que**
la couronne secondaire (4) est réalisée avec une symétrie de révolution.

17. Implant dentaire selon l'une quelconque des revendications 1 à 14,
**caractérisé en ce que**
la couronne secondaire (4) s'applique à plat contre le secteur de compensation (10) de la couronne primaire (3).

18. Combinaison de deux implants dentaires espacés selon l'une quelconque des revendications 1 à 17, dans laquelle les secteurs de cône de friction (9) des deux éléments d'implant (4) forment ensemble un angle (γ) supérieur à 180°, à l'intérieur de l'une des extrémités d'enveloppement comprenant les deux éléments d'implant (4).
